# EUROPÄISCHE PATENTSCHRIFT

(11) **EP 1 869 747 B1**
(45) Veröffentlichungstag und Bekanntmachung des Hinweises auf die Patenterteilung: **13.06.2012**
(21) Anmeldenummer: 06725576.0
(22) Anmeldetag: 05.04.2006
(51) Int. Cl.: H02J 7/02

(54) **PRIMÄRTEIL FÜR EINE KONTAKTLOSE STROMVERSORGUNG MIT BETRIEBSZUSTANDSÜBERWACHUNG DES SEKUNDÄRTEILS**
PRIMARY PART FOR A NON-CONTACT POWER SUPPLY, USED TO MONITOR THE OPERATING STATE OF THE SECONDARY PART
PARTIE PRIMAIRE POUR UNE ALIMENTATION EN COURANT SANS CONTACT A SURVEILLANCE DE L'ETAT DE FONCTIONNEMENT DE LA PARTIE SECONDAIRE

(30) Priorität: 12.04.2005 DE 102005016857
(43) Veröffentlichungstag der Anmeldung: 26.12.2007
(73) Patentinhaber: ASM Assembly Systems GmbH & Co. KG, 81379 München (DE)
(72) Erfinder: GÖTZE, Thomas, 09113 Chemnitz (DE); ROEDER, Frank, 04317 Leipzig (DE)
(74) Vertreter: Patentanwälte Bals & Vogel
(86) Internationale Anmeldenummer: PCT/EP2006/061346
(87) Internationale Veröffentlichungsnummer: WO 2006/108787

(56) Entgegenhaltungen:
- EP-A- 0 886 232
- WO-A-02/37641
- US-A- 5 304 917

## Beschreibung

Die Erfindung betrifft einen Primärteil für eine kontaktlosen Stromversorgungsvorrichtung, wobei der Primärteil zur kontaktlosen Übertragung elektrischer Leistung mittels Induktion auf eine Sekundärspule eines Sekundärteils vorgesehen ist, der Primärteil zumindest von der Sekundärspule des Sekundärteils trennbar ist, und der Primärteil mit einer Spannungsquelle verbindbar ist. Die Erfindung betrifft weiter eine Stromversorgungsvorrichtung mit einem derartigen Primärteil.

Eine derartige Stromversorgungsvorrichtung kommt beispielsweise im industriellen Bereich der Automatisierungstechnik zum Einsatz. Mögliche Anwendungen sind auch in der Robotik beheimatet, wie z. B. bei Maschinenwerkzeugen und kontaktlosen Ladegeräten. Weiterhin ist auch ein Einsatz im privaten Konsumerbereich denkbar. Die grundlegenden Vorteile einer kontaktlosen Stromversorgungsvorrichtung liegen darin, dass beispielsweise bewegungsbeanspruchte Kabel überflüssig und damit verschleißbedingte Kabelbrüche vermieden werden. Weiterhin können problematische Kontaktwiderstände, und ungeschützte Hochspannungskontakte vermieden werden. In diesem Zusammenhang bietet diese Technik einen wirksamen Schutz vor Funkenüberschlag in explosionsgefährdeten Umgebungen.

Aus US 20050018452 A1 ist eine kontaktlose Stromversorgung bekannt, wobei ein Primärstromkreis durch eine Spannungsquelle mit Energie versorgt wird und diese an einen Sekundärstromkreis kontaktlos überträgt. Der Abstand der beiden Einheiten ist vordefiniert, ebenso wie der Kopplungskoeffizient der beiden Stromkreise.

Weiterhin ist die Technologie der kontaktlosen Energieübertragung ebenfalls Gegenstand akademischer Forschung (siehe z.B. Mecke, R.: "Einführung in die Technologie der kontaktlosen Energie- und Datenübertragung." Workshop Kontaktlose Energieübertragung KONTENDA 2003, IGZ-Barleben, 14. Oktober 2003.).

Weiterhin wird auf die Dokumente WO 02 137641und EP0886232 hingewiesen, die ebenfalls Kontakhlose Energie übertragungen behandeln.

Der Erfindung liegt die Aufgabe zugrunde, einen Primärteil der eingangs genannten Art derart weiterzuentwickeln, dass gleichzeitig eine Analyse von Betriebszuständen des Sekundärteils ermöglicht wird.

Diese Aufgabe wird durch ein Primärteil für eine kontaktlose Stromversorgungsvorrichtung gelöst, wobei der Primärteil zur kontaktlosen Übertragung elektrischer Leistung mittels Induktion auf eine Sekundärspule eines Sekundärteils vorgesehen ist, wobei der Primärteil zumindest von der Sekundärspule des Sekundärteils trennbar ist, wobei der Primärteil mit einer Spannungsquelle verbindbar ist, wobei der Primärteil eine Identifikationseinheit aufweist, bestehend aus einem Stromsensor und einer Analyseeinheit zur Identifikation von Betriebszuständen des Sekundärteils.

Diese Aufgabe wird weiter durch eine Stromversorgungsvorrichtung mit einem derartigen Primärteil gelöst, wobei die Stromversorgungsvorrichtung einen Sekundärteil aufweist, wobei der Sekundärteil zum kontaktlosen Empfang elektrischer Leistung mittels Induktion vorgesehen ist, und wobei der Sekundärteil zur Abgabe der induzierten Leistung an mindestens einen Leistungsempfänger vorgesehen ist. Auf diese Weise ist eine beliebig kombinierbare modulare kontaktlose Stromversorgung realisierbar, die einen hohen Grad an Flexibilität aufweist.

Der Erfindung liegt die Erkenntnis zugrunde, dass bei einer Stromversorgungsvorrichtung Informationen über den Betriebszustand des Sekundärteils ohne weiteres durch eine herkömmliche Stromanalyse über mechanische Stromkontakte aus dem Sekundärteil extrahierbar sind, bei einer kontaktlosen Stromversorgungsvorrichtung diese Informationen primärseitig aber nicht ohne weiteres zur Verfügung stehen. Dieser direkte Widerspruch zur geforderten Trennbarkeit und zur Mobilitätsoption des Sekundärteils wird mittels der Identifikationseinheit gelöst, die im Primärteil angeordnet ist und mittels Stromsensor und Analyseeinheit Betriebszustände des Sekundärteils ermittelt. Somit werden zur optimalen Nutzung des "kontaktlosen Kontaktes" zwischen Primärteil und Sekundärteil die Betriebszustände des Sekundärteils über den kontaktlosen Kontakt aus dem Primärteil gewonnen.

So kann mittels der Identifikationseinheit beispielsweise ein zusätzlicher Eigenschutz des Energie aussendenden Primärteils ermöglicht werden. Anhand der "Stromanalyse" im Primärteil ist es weiter möglich eine Aussage zu treffen, ob ein Sekundärteil überhaupt vorhanden ist. Folglich kann der Primärteil abgeschaltet werden, und somit ein ansonsten unnötigerweise das Primärteil belastender Betriebszustand der Stromversorgungsvorrichtung vermieden werden.

Die Identifikationseinheit ermöglicht außerdem eine Positionsverifizierung der Sekundärspule, beziehungsweise und zum Beispiel, auch des Sekundärteils selbst. Anhand der Stromanalyse im Primärteil ist es möglich, eine Aussage zu treffen, ob der Abstand der Primärspule zur Sekundärspule tatsächlich ein vorgebbarer oder erwünschter Abstand ist. Dies ist eine sehr wichtige Eigenschaft, beispielsweise auch bei der maschinellen Positionierung oder Positionskontrolle von Bauteilen und Gegenständen geht, die einen Sekundärteil aufweisen.

Die Identifikationseinheit der Erfindung ermöglicht eine Positionsmessung der Sekundärspule, beziehungsweise und zum Beispiel, auch des Sekundärteils selbst. Anhand der "Stromanalyse" im Primärteil ist es möglich eine Aussage zu treffen, wie groß ein gesuchter Abstand zwischen Primärteil und Sekundärspule ist. Dies ist eine sehr wichtige Eigenschaft, wenn es um die Charakterisierung von Bauteilen und Gegenständen geht, die einen Sekundärteil aufweisen.

Eine vorteilhafte Ausgestaltungsform ist ein Primärteil, wobei als Identifikation eines ersten Betriebszustandes die Analyseeinheit zur Ausgabe einer ersten Information über den Abstand einer Primärspule von einer Sekundärspule vorgesehen ist, die beispielsweise zur Charakterisierung der Position der Sekundärspule benutzt werden kann.

Eine vorteilhafte Ausgestaltungsform ist ein Primärteil, wobei als Identifikation eines zweiten Betriebszustandes die Analyseeinheit zur Ausgabe einer zweiten Information über eine elektrische Last mindestens eines Leistungsempfängers des Sekundärteils vorgesehen ist, die beispielsweise zur Charakterisierung mindestens eines Leistungsempfängers oder des betreffenden Sekundärteils benutzt werden kann.

Eine vorteilhafte Ausgestaltungsform ist ein Primärteil, wobei die Analyseeinheit für eine Ausgabe der ersten Information zur Ermittlung des Abstandes des Primärteils vom Sekundärteil vorgesehen ist, die beispielsweise zur Charakterisierung der Position des Sekundärteils benutzt werden kann.

Eine vorteilhafte Ausgestaltungsform ist ein Primärteil, wobei die Analyseeinheit für eine Ausgabe der Informationen zur Ermittlung eines Wirkstromes oder eines Blindstromes vorgesehen ist, anhand des ermittelten Wirk- oder Blindstromes können dann Aussagen über Betriebszustände der Stromversorgungsvorrichtung gemacht werden.

Eine vorteilhafte Ausgestaltungsform ist ein Primärteil, der einen Gleichstrom-Wechselstrom Inverter enthält, der zum Anschluss an die Spannungsquelle, und zur Versorgung der Primärspule mit Wechselspannung vorgesehen ist.

Der Gleichstrom-Wechselstrom Inverter enthält eine Steuereinheit und eine Brückenschaltung mit aktiv gesteuerten Schaltern, die in einem festen Phasenverhältnis zum Referenzsignal des Steuergerätes operabel sind.

Eine vorteilhafte Ausgestaltungsform ist ein Primärteil, der einen Stromsensor enthält, der mit dem Gleichstrom-Wechselstrom Inverter und der Primärspule in Serie geschaltet ist, da eine Strommessung ohne vorherige Filterung erfolgt und man das anliegende Signal auf jede denkbare Komponente untersuchen kann.

Eine vorteilhafte Ausgestaltungsform ist ein Primärteil, der einen Stromsensor enthält, der innerhalb der Brückenschaltung derart geschaltet ist, dass zwischen der Primärspule und dem Stromsensor mindestens ein aktiv gesteuerter Schalter geschaltet ist, der als Vorfilter fungiert und damit die Filtereinheit überflüssig werden lässt. Dadurch gewinnt das Primärteil an Kompaktheit und seine Herstellung an Kosteneffizienz.

Eine vorteilhafte Ausgestaltungsform ist ein Primärteil, dessen Analyseeinheit mindestens zwei separierbare Elemente enthält, eine Filtereinheit und eine Vergleichseinheit, wobei die Filtereinheit optional ist.

Eine vorteilhafte Ausgestaltungsform ist ein Primärteil, dessen Filtereinheit mindestens einen phasenempfindlichen Gleichrichter enthält, der an den Stromsensor anschließbar ist, womit die technische Möglichkeit sichergestellt ist, die Filtereinheit bei Bedarf zu vermeiden.

Eine vorteilhafte Ausgestaltungsform ist ein Primärteil, dessen Filtereinheit einen phasenempfindlichen Gleichrichter zur Extraktion eines elektrischen Signals als Maß für den Wirkstrom im Sekundärteil verwendet.

Eine vorteilhafte Ausgestaltungsform ist ein Primärteil, dessen Filtereinheit einen phasenempfindlichen Gleichrichter zur Extraktion eines elektrischen Signals als Maß für den Blindstrom im Primärteil verwendet.

Eine vorteilhafte Ausgestaltungsform ist ein Primärteil, der die Option die Ausgänge der phasenempfindlichen Gleichrichter an frequenzselektive Filter zur Signalaufbereitung anzuschließen, offen hält.

Eine vorteilhafte Ausgestaltungsform ist ein Primärteil, dessen Ausgänge der frequenzselektiven Filter an die Anschlüsse der Vergleichseinheit anschließbar sind.

Eine vorteilhafte Ausgestaltungsform ist ein Primärteil, dessen Ausgang des Stromsensors an die Anschlüsse der Vergleichseinheit anschließbar ist, um die Filtereinheit zu umgehen oder überflüssig zu machen.

Eine sinnvolle Ausgestaltungsform ist ein Primärteil, dessen Vergleichseinheit mindestens einen Komparator mit zwei Eingängen enthält.

Eine vorteilhafte Ausgestaltungsform ist ein Primärteil, dessen Komparatoren Eingänge besitzen, die an die Anschlüsse der Vergleicheinheit und auch Eingänge besitzen, die an eine Referenzspannungsquelle anschließbar sind, um anhand des Vergleichs die Betriebszustände des Sekundärteils identifizieren zu können.

Eine vorteilhafte Ausgestaltungsform einer kontaktlosen Stromversorgungsvorrichtung ist eine Kombination aus Teilen, die in Ihrer Funktion einem Primärteil, wobei der Primärteil zur kontaktlosen Übertragung elektrischer Leistung mittels Induktion auf eine Sekundärspule eines Sekundärteils vorgesehen ist, wobei der Primärteil zumindest von der Sekundärspule des Sekundärteils trennbar ist, wobei der Primärteil mit einer Spannungsquelle verbindbar ist, wobei der Primärteil eine Identifikationseinheit aufweist, bestehend aus einem Stromsensor und einer Analyseeinheit zur Identifikation von Betriebszuständen des Sekundärteils, oder einem Sekundärteil, wobei der Sekundärteil zum kontaktlosen Empfang elektrischer Leistung mittels Induktion vorgesehen ist, wobei der Sekundärteil zur Abgabe der induzierten Leistung an mindestens einen Leistungsempfänger vorgesehen ist, entsprechen.

Eine vorteilhafte Ausgestaltungsform einer kontaktlosen Stromversorgungsvorrichtung beinhaltet einen Sekundärteil, der von der Sekundärspule mit Wechselstrom versorgbar ist, und zur Versorgung mindestens eines Leistungsempfängers vorgesehen ist, wodurch auch eine hohe Flexibilität seitens der Kombination der Leistungsempfänger gewährleistet wird.

Eine vorteilhafte Ausgestaltungsform einer kontaktlosen Stromversorgungsvorrichtung beinhaltet einen Sekundärteil, dessen Gleichrichter von der Sekundärspule mit Wechselstrom versorgbar ist, und zur Versorgung mindestens eines Leistungsempfängers mit Gleichstrom vorgesehen ist.

Im Folgenden wird die Erfindung anhand der in den Figuren dargestellten Ausführungsbeispiele näher beschrieben und erläutert. Es zeigen:
- FIG 1: eine Prinzipdarstellung eines Primärteils mit einer integrierten Identifikationseinheit und einer Spannungsversorgung,
- FIG 2: ein erstes Ausführungsbeispiel eines Primärteils,
- FIG 3: ein weiteres Ausführungsbeispiel eines Primärteils,
- FIG 4: eine Prinzipdarstellung eines Sekundärteils mit Leistungsempfängern,
- FIG 5: Schematische Veranschaulichung der Funktionen von Primär- und Sekundärteilen, und
- FIG 6: Schematische Veranschaulichung der Mobilitätseigenschaften von Primär- und Sekundärteilen.

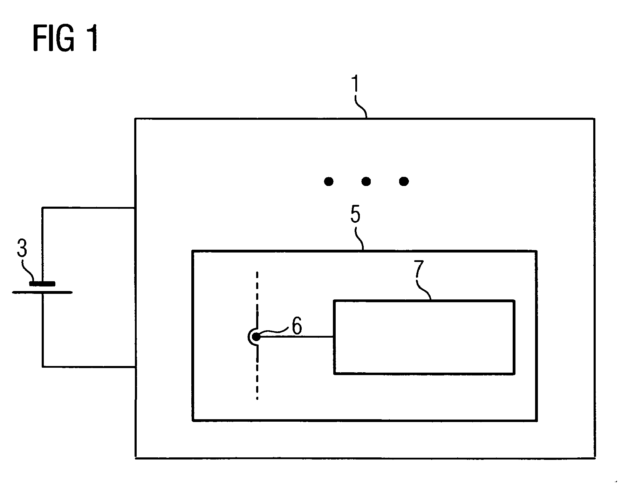

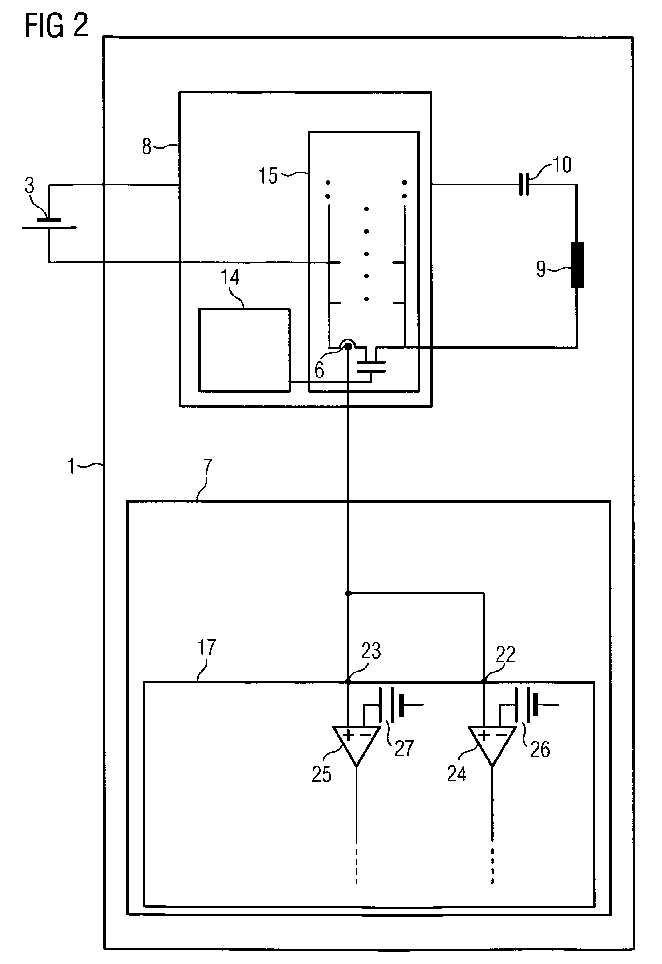

FIG 1 zeigt eine Prinzipdarstellung eines an eine Spannungsquelle 3 angeschlossenen Primärteils 1 einer kontaktlosen Stromversorgungsvorrichtung. Die Besonderheit des in Figur 1 gezeigten Primärteils 1 besteht darin, dass dieser einen Stromsensor 6 und eine Analyseeinheit 7 enthält, womit die elektrischen Ströme innerhalb des Primärteils 1 mess- und auswertbar sind. Hinsichtlich des Ortes und Anschluss des Stromsensors 6 und der Analyseeinheit 7 sind verschiedene Ausführungsformen des Primärteils möglich, die im Zusammenhang mit den Figuren 2 bis 3 gezeigt und beschrieben werden. Die Unterschiede der Ausführungsformen betreffen Position der Stelle, wo die Strommessung erfolgt und/oder den Aufbau der Analyseeinheit 7.

Der Primärteil 1 erhält die zu übertragende Energie von der Spannungsquelle 3, wobei der Stromsensor 6 die elektrischen Ströme im Primärkreislauf misst, die von der Analyseeinheit 7 ausgewertet werden, um eine Aussage zu den Betriebszuständen des Sekundärteils 2 möglich zu machen.

FIG 2 zeigt ein Ausführungsbeispiel des in Figur 1 gezeigten Primärteils 1 mit einem Stromsensor 6, wobei der Stromsensor 6 innerhalb eines Gleichstrom-Wechselstrom Inverters 8 angebracht ist. Der Gleichstrom-Wechselstrom Inverter 8 enthält weiterhin eine Steuereinheit 14 zur Kontrolle von Schaltern einer ebenfalls enthaltenen Brückenschaltung 15. Der Stromsensor 6 ist derart geschaltet, dass zwischen Stromsensor 6 und Primärspule 9 mindestens ein aktiv gesteuerter Schalter der Brückenschaltung 15 geschaltet ist. Optional kann der Primärstromkreis einen Kondensator 10 zur Eliminierung von Blindströmen enthalten. Der Stromsensor 6 und Referenzspannungsquellen 26,27 sind an Komparatoren 24, 25 einer Vergleichseinheit 17 innerhalb einer Analyseeinheit 7 angeschlossen.

Die "Stromanalyse" findet hier mit einem seitens des zwischengeschalteten Schalters vorgefilterten Signal statt. Diese Vorfilterung vereinfacht die Analyseeinheit 7. Das gemessene Signal kann direkt in den Komparatoren 24,25 mit den Referenzspannungen 26,27 verglichen werden. Die Ausgabe der Komparatoren 24,25 sind Maße für den Wirkstrom und den Blindstrom, welche benötigt werden, um Betriebszustände des Sekundärteils 2 zu identifizieren.

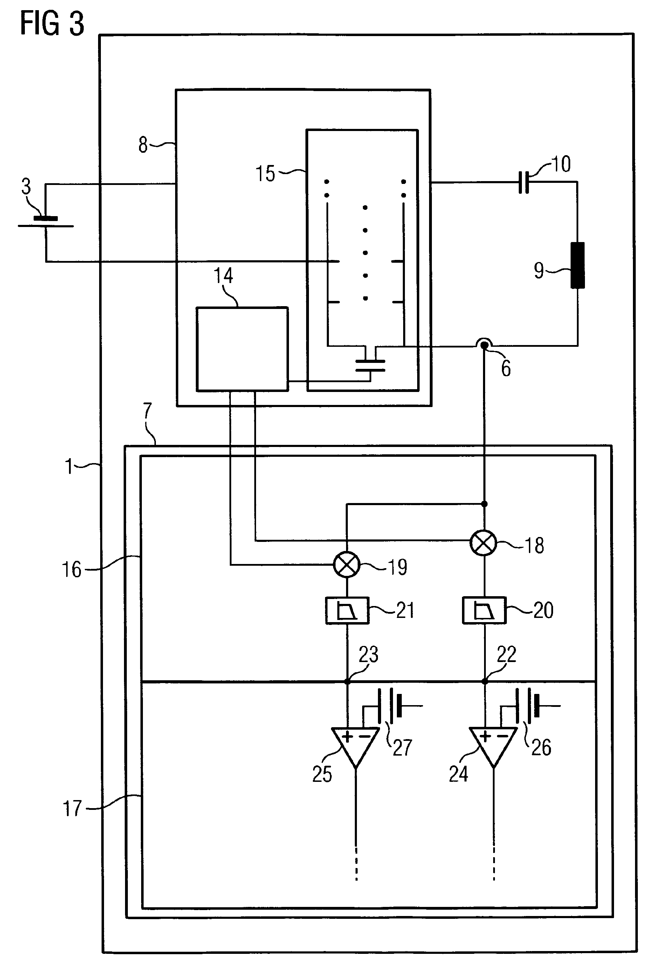

FIG 3 zeigt eine Prinzipdarstellung eines Primärteils 1, wobei der Stromsensor 6 innerhalb des Primärstromkreises zwischen Gleichstrom-Wechselstrom Inverter 8 und der Primärspule 9 geschaltet ist. Optional kann der Primärstromkreis einen Kondensator 10 zur Eliminierung von Blindströmen enthalten. Das Steuergerät 14 ist über Steuerleitungen mit phasenempfindlichen Gleichrichtern 18,19 verbunden, die mit Steuersignalen operabel sind, die eine feste Phasenbeziehung haben. Die phasenempfindlichen Gleichrichter 18,19 sind Teil einer ersten Filtereinheit 16, die wiederum Teil der Analyseeinheit 7 ist. Die phasenempfindlichen Gleichrichter 18,19 sind an den Stromsensor 6 angeschlossen. Die Frequenzfilter 20,21 sind wiederum an die phasenempfindlichen Gleichrichter 18,19 angeschlossen. Die Ausgänge der Gleichrichter 18,19 bieten Anschlüsse 22,23 einer zweiten Filtereinheit 17 innerhalb der Analyseeinheit 7.

Die phasenempfindlichen Gleichrichter 18,19 analysieren den gemessenen Strom derart, dass ein Ausgabesignal in Bezug zum phasenabhängigen Referenzsignal extrahiert wird. Durch die Frequenzfilter 20,21 werden die Ausgabesignale der phasenempfindlichen Gleichrichter 18,19 von unerwünschten Signalanteilen getrennt. Die Ausgangssignale der Frequenzfilter 20,21 werden über die Anschlüsse 22,23 an die Vergleichseinheit 17 übergeben. Komparatoren 24,25 vergleichen die Spannungen, die an die Anschlüsse 22,23 anliegen mit den Referenzspannungen 26,27. Die Ausgabesignale der Komparatoren 24,25 sind Maße für den Wirkstrom und den Blindstrom, welche benötigt werden, um Betriebszustände des Sekundärteils 2 zu identifizieren.

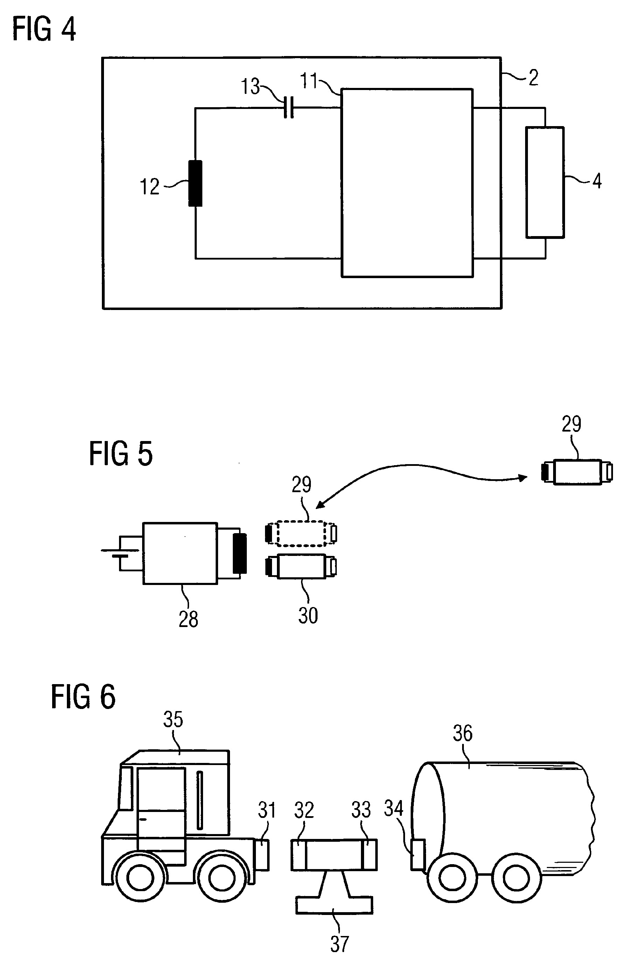

FIG 4 zeigt eine Prinzipdarstellung eines Sekundärteils 2 in einer schematischen Ausführungsform. Das Sekundärteil 2 enthält eine Sekundärspule 12 und optional einen Kondensator 13. Diese sind an einen optionalen Gleichrichter 11 oder Leistungsempfänger 4 anschließbar, wobei der Gleichrichter 11 ebenfalls an mögliche Leistungsempfänger 4 anschließbar ist. Die elektrische Leistung wird induktiv über die Sekundärspule 12 in den Sekundärstromkreis eingespeist. Ist der Gleichrichter 11 vorhanden, werden die Leistungsempfänger 4 mit Gleichstrom versorgt, andernfalls mit Wechselstrom.

FIG 5 zeigt die schematische Veranschaulichung eines Primärteils 28, eines Sekundärteils 29 mit großem Lastwiderstand und eines Sekundärteils 30 mit geringem Lastwiderstand, wobei das Sekundärteil 29 mit großem Lastwiderstand in der Veranschaulichung mobil ist.

Die Identifikationseinheit der Erfindung ermöglicht eine definitive Identifizierung der Sekundärteile, bzw. deren Leistungsempfänger anhand der "Stromanalyse", weil Sekundärteil 29 und Sekundärteil 30 durch ihren Lastwiderstand unterscheidbar sind. Die Identifikationseinheit der Erfindung ermöglicht ebenfalls eine Positionsverifizierung, um beispielsweise nachzuvollziehen, ob sich Sekundärteil 29 am dafür vorgesehenen Platz befindet.

Weiterhin kann die Identifikationseinheit der Erfindung eine kontaktlose Messung des Sekundärteils durchführen, wenn dieses unbekannt ist. Die Position und der Lastwiderstand des Sekundärteils sind nicht nur verifizierbar sondern auch messbar. Falls, beispielsweise, die Umstände keine gewöhnliche Strommessung mit mechanischen Kontakten zulassen, kann ein Lastwiderstand und/oder ein Abstand gemessen werden um das Sekundärteil zu charakterisieren.

FIG 6 zeigt ein Ausführungsbeispiel einer kontaktlosen Stromversorgung "kontaktlose Batterieladung". Dabei soll auf die Vorteile der Trennbarkeit und die damit ermöglichte zusätzliche Mobilität des Primärteils und des Sekundärteils eingegangen werden. Um beispielsweise ein Elektroauto 35 zu betanken ist eine Elektrotankstelle 37 im Sinne eines Primärteils 32 vorgesehen, wobei das Elektroauto 35 einen Sekundärteil 31 beinhaltet, da es mit elektrischer Leistung betankt werden soll. Die aufladbare Batterie des Elektroautos 35 stellt in diesem Szenario den Leistungsempfänger dar. Der Primärteil 32 ist demnach als stationär und der Sekundärteil 31 als mobil anzusehen. Im gleichen Beispiel ist der Elektrotankwagen 36, der die Elektrotankstelle 37 mit elektrischer Energie versorgt wiederum mit einem Primärteil 34 ausgerüstet und die Elektrotankstelle 37 erhält die elektrische Energie über ein integriertes Sekundärteil 33. In diesem Fall hat sich die Mobilitätssituation umgekehrt. Im Allgemeinen ist festzuhalten, dass der Einsatz sowohl des Primärteils, als auch des Sekundärteils auf stationärer, als auch auf mobiler Basis erfolgen kann.

Zusammenfassend betrifft die Erfindung einen Primärteil einer kontaktlosen Stromversorgungsvorrichtung, die in der Lage ist Energie über eine kontaktlose Verbindung mittels Induktion vom Primärteil auf ein Sekundärteil zu übertragen. Da in der Regel herkömmliche sekundärseitige Stromanalysen unerwünscht sind, nutzt die Erfindung primärseitige Stromanalysen um Informationen zu Betriebszuständen des Sekundärteils zu erhalten. Gegenstand der Analyse ist deshalb der Primärstrom im Primärteil, der von einer Identifikationseinheit auf seine Anteile hin untersucht wird, die Informationen über den Abstand der Sekundärspule von der Primärspule und der Last des Sekundärteils enthalten.

## Patentansprüche

1. Primärteil (1) für eine kontaktlose Stromversorgungsvorrichtung, wobei
- der Primärteil (1) zur kontaktlosen Übertragung elektrischer Leistung mittels Induktion auf mindestens eine Sekundärspule (12) mindestens eines Sekundärteils (2) vorgesehen ist,
- der Primärteil (1) zumindest von der Sekundärspule (12) des Sekundärteils (2) trennbar ist, und
- der Primärteil (1) mit einer Spannungsquelle (3) verbindbar ist,
**dadurch gekennzeichnet,**
**dass** der Primärteil (1) eine Identifikationseinheit (5)
aufweist, bestehend aus einem Stromsensor (6) zum Messen von Primärströmen und einer Analyseeinheit (7)zum Auswerten der > gemessenen Primärströme und zur Identifikation von Betriebszuständen des Sekundärteils (2), wobei als Identifikation eines ersten Betriebszustandes die Analyseeinheit (7) zur Ausgabe einer ersten Information über den Abstand einer Primärspule (9) von einer Sekundärspule (12) vorgesehen ist und wobei für Ausgabe der ersten Information die die Gewinnung und Ausgabeeinheit (7) die Ermittlung eines Wirksanteils oder die eines Blindanteils eines gemessenen Primärstroms dundrführt.

2. Primärteil (1) für eine kontaktlose Stromversorgungseinrichtung nach Anspruch 1, wobei als Identifikation eines zweiten Betriebszustandes die Analyseeinheit (7) zur Ausgabe einer zweiten Information über eine elektrische Last mindestens eines Leistungsempfängers (4) des Sekundärteils (2) oder des Sekundärteils (2) selbst vorgesehen ist.

3. Primärteil (1) für eine kontaktlose Stromversorgungs-einrichtung nach einem der vorhergehenden Ansprüche, wobei die Analyseeinheit (7) für eine Ausgabe der ersten Information zur Ermittlung des Abstandes des Primärteils (1) vom Sekundärteil (2) vorgesehen ist.

4. Primärteil (1) für eine kontaktlose Stromversorgungseinrichtung einem der vorhergehenden Ansprüche, wobei der Primärteil (1) einen Gleichstrom-Wechselstrom Inverter (8) enthält, der zum Anschluss an die Spannungsquelle (3), und zur Versorgung der Primärspule (9) mit Wechselspannung vorgesehen ist.

5. Primärteil (1) für eine kontaktlose Stromversorgungs-einrichtung nach Anspruch 4, wobei der Gleichstrom-Wechselstrom Inverter (8) eine Steuereinheit (14) und eine Brückenschaltung (15) mit aktiv gesteuerten Schaltern enthält, die in einem festen Phasenverhältnis zum Referenzsignal des Steuergerätes (14) operabel sind.

6. Primärteil (1) für eine kontaktlose Stromversorgungseinrichtung nach Anspruch 4,5 wobei der Stromsensor (6) mit dem Gleichstrom-Wechselstrom Inverter (8) und der Primärspule (9) in Serie geschaltet ist.

7. Primärteil (1) für eine kontaktlose Stromversorgungseinrichtung nach Ansprpuch 5,6 wobei der Stromsensor (6) innerhalb der Brückenschaltung (15) derart geschaltet ist, dass zwischen der Primärspule (9) und dem Stromsensor (6) mindestens ein aktiv gesteuerter Schalter geschaltet ist.

8. Primärteil (1) für eine kontaktlose Stromversorgungseinrichtung nach einem der vorhergehenden Ansprüche, wobei die Analyseeinheit (7) eine Filtereinheit (16) und eine Vergleichseinheit (17) enthält.

9. Primärteil (1) für eine kontaktlose Stromversorgungs-einrichtung nach Anspruch 8, wobei die Filtereinheit (16) mindestens einen phasenempfindlichen Gleichrichter enthält, der an den Stromsensor (6) anschließbar ist.

10. Primärteil (1) für eine kontaktlose Stromversorgungs-einrichtung nach Anspruch 8,9, wobei die Filtereinheit (16) einen phasenempfindlichen Gleichrichter (18) zur Extraktion eines elektrischen Signals als Maß für den Wirkstrom im Sekundärteil (2) ist.

11. Primärteil (1) für eine kontaktlose Stromversorgungs-einrichtung nach Anspruch 8,9, wobei die Filtereinheit (16) einen phasenempfindlichen Gleichrichter (19) zur Extraktion eines elektrischen Signals als Maß für den Blindstrom im Primärteil (1) enthält.

12. Primärteil (1) für eine kontaktlose Stromversorgungs-einrichtung nach Anspruch 9,10,11 wobei der Ausgang des phasenempfindlichen Gleichrichters (18) an einen frequenzselektiven Filter (20) zur Signalaufbereitung anschließbar ist.

13. Primärteil (1) für eine kontaktlose Stromversorgungs-einrichtung nach Anspruch 12, wobei der frequenzselektive Filter (20) an den Anschluss (22) der Vergleichseinheit (17) anschließbar ist.

14. Primärteil (1) für eine kontaktlose Stromversorgungs-einrichtung nach Anspruch 9,12,11 wobei der Ausgang des phasenempfindlichen Gleichrichters (19) an einen frequenzselektiven Filter (21) zur Signalaufbereitung anschließbar ist.

15. Primärteil (1) für eine kontaktlose Stromversorgungseinrichtung nach Anspruch 14, wobei der frequenzselektive Filter (21) an den Anschluss (23) der Vergleichseinheit (17) anschließbar ist.

16. Primärteil (1) für eine kontaktlose Stromversorgungs-einrichtung nach Anspruch 13,15 wobei der Ausgang des stromsensors (6) an Anschlüsse (22, 23) der Vergleichseinheit (17) anschließbar ist.

17. Primärteil (1) für eine kontaktlose Stromversorgungs-einrichtung nach Anspruch 8-16, wobei die Vergleichseinheit (17) mindestens einen Komparator mit zwei Eingängen enthält.

18. Primärteil (1) für eine kontaktlose Stromversorgungseinrichtung nach Anspruch 17, wobei ein Eingang eines Komparators (24) an den Anschluss (22) und der zweite Eingang des Komparators (24) an eine Referenzspannungsquelle (26) anschließbar ist.

19. Primärteil (1) für eine kontaktlose stromversorgungseinrichtung nach Anspruch 17,18, wobei ein Eingang eines Komparators (25) an den Anschluss (23) und der zweite Eingang des Komparators (25) an eine Referenzspannungsquelle (27) anschließbar ist.

20. Stromversorgungsvorrichtung mit mindestens einem Primärteil (1) nach einem der vorhergehenden Ansprüche, wobei die Stromversorgungsvorrichtung mindestens einem Sekundärteil (2) aufweist, wobei
- der Sekundärteil (2) zum kontaktlosen Empfang elektrischer Leistung mittels Induktion vorgesehen ist,
- der Sekundärteil (2) zur Abgabe der induzierten Leistung an mindestens einen Leistungsempfänger (4) vorgesehen ist.

21. Stromversorgungsvorrichtung nach Anspruch 20, wobei der Sekundärteil (2) von der Sekundärspule (12) mit Wechselstrom versorgbar ist, und zur Versorgung mindestens eines Leistungsempfängers (4) vorgesehen ist.

22. Stromversorgungsvorrichtung nach einem der Ansprüche 20 oder 21, wobei der Sekundärteil (2) einen Gleichrichter (11) enthält, der von der Sekundärspule (12) mit Wechselstrom versorgbar ist, und zur Versorgung mindestens eines Leistungsempfängers (4) mit Gleichstrom vorgesehen ist.

## Claims

1. Primary part (1) for a non-contact power supply device, wherein
- the primary part (1) is provided for the contactless transmission of electrical power by induction to at least one secondary coil (12) of at least one secondary part (2),
- the primary part (1) is at least separable from the secondary coil (12) of the secondary part (2), and
- the primary part (1) is connectable to a voltage source (3),
**characterized in**
**that** the primary part (1) has an identification unit (5), consisting of a current sensor (6) for measuring of primary currents and an analysis unit (7) for evaluating the measured primary currents and for identifying operating states of the secondary part (2), wherein as identification of a first operating status the analysis unit (7) is provided for the output of a first information about the distance of a primary coil (9) from a secondary coil (12), and wherein for the retrieval and output of the first information the output unit (7) carries out the determination of an active or reactive component of a measured primary current.

2. Primary part (1) for a non-contact power supply device according to claim 1, wherein as identification of a second operating status the analysis unit (7) is provided for the output of a second information about an electric load of at least one power receptor (4) of the secondary part (2) or of the secondary part (2) itself.

3. Primary part (1) for a non-contact power supply device according to one of the preceding claims, wherein the analysis unit (7) is provided for an output of the first information for determining the distance of the primary part (1) from the secondary part (2).

4. Primary part (1) for a non-contact power supply device according to one of the preceding claims, wherein the primary part (1) comprises a direct/alternating current inverter (8), which is provided for connection to the voltage source (3) and for supply of the primary coil (9) with alternating voltage.

5. Primary part (1) for a non-contact power supply device according to claim 4, wherein the direct/alternating current inverter (8) comprises a control unit (14) and a bridge connection (15) with actively controlled switches, which are operable in a fixed phase relationship to the reference signal of the control unit (14).

6. Primary part (1) for a non-contact power supply device according to claim 4 or 5, wherein the current sensor (6) is connected in series with the direct/alternating current inverter (8) and the primary coil (9).

7. Primary part (1) for a non-contact power supply device according to claim 5 or 6, wherein the current sensor (6) is switched within the bridge connection (15) such that between the primary coil (9) and the current sensor (6) at least one actively controlled switch is connected.

8. Primary part (1) for a non-contact power supply device according to one of the preceding claims, wherein the analysis unit (7) comprises a filter unit (16) and a comparison unit (17).

9. Primary part (1) for a non-contact power supply device according to claim 8, wherein the filter unit (16) comprises at least one phase-sensitive rectifier, which is connectable to the current sensor (6).

10. Primary part (1) for a non-contact power supply device according to claim 8 or 9, wherein the filter unit (16) is a phase-sensitive rectifier (18) for the extraction of an electric signal as a measure for the active current in the secondary part (2).

11. Primary part (1) for a non-contact power supply device according to claim 8 or 9, wherein the filter unit (16) comprises a phase-sensitive rectifier (19) for the extraction of an electric signal as a measure for the reactive current within the primary part (1).

12. Primary part (1) for a non-contact power supply device according to claim 9, 10 or 11, wherein the outlet of the phase-sensitive rectifier (18) is connectable to a frequency-selective filter (20) for signal processing.

13. Primary part (1) for a non-contact power supply device according to claim 12, wherein the frequency-selective filter (20) is connectable to the connector (22) of the comparison unit (17).

14. Primary part (1) for a non-contact power supply device according to claim 9, 10 or 11, wherein the outlet of the phase-sensitive rectifier (19) is connectable to a frequency-selective filter (21) for signal processing.

15. Primary part (1) for a non-contact power supply device according to claim 14, wherein the frequency-selective filter (21) is connectable to the connector (23) of the comparison unit (17).

16. Primary part (1) for a non-contact power supply device according to claim 13 or 15, wherein the outlet of the current sensor (6) is connectable to at least one of the connectors (22, 23) of the comparison unit (17).

17. Primary part (1) for a non-contact power supply device according to claims 8-16, wherein the comparison unit (17) comprises at least one comparator with two inlets.

18. Primary part (1) for a non-contact power supply device according to claim 17, wherein one inlet of a comparator (24) is connectable to the connector (22) and the second inlet of the comparator (24) is connectable to a reference voltage source (26).

19. Primary part (1) for a non-contact power supply device according to claim 17 or 18, wherein one inlet of a comparator (25) is connectable to the connector (23) and the second inlet of the comparator (25) is connectable to a reference voltage source (27).

20. Power supply device with at least one primary part (1) according to one of the preceding claims, wherein the power supply device comprises at least one secondary part (2), wherein
- the secondary part (2) is provided for the contactless reception of electrical power by induction,
- the secondary part (2) is provided for the delivery of the induced power to at least one power receptor (4).

21. Power supply device according to claim 20, wherein the secondary part (2) can be supplied with alternating current by the secondary coil (12) and is provided for supplying at least one power receptor (4).

22. Power supply device according to claim 20 or 21, wherein the secondary part (2) comprises a rectifier (11), which can be supplied with alternating current by the secondary coil, and wherein the secondary part (2) is provided for supplying at least one power receptor (4) with direct current.

## Revendications

1. Partie primaire (1) pour un dispositif d'alimentation en courant sans contact,
- *laquelle partie primaire (1) est prévue pour la* transmission sans contact de puissance électrique par induction à au moins une bobine secondaire (12) d'au moins une partie secondaire (2),
- laquelle partie primaire (1) peut être séparée au moins de la bobine secondaire (12) de la partie secondaire (2), et
- laquelle partie primaire (1) peut être reliée à une source de tension (3),
**caractérisée en ce**
**que** la partie primaire (1) présente une unité d'identification (5) composée d'un capteur de courant (6) pour mesurer les courants primaires et d'une unité d'analyse (7) pour évaluer les courants primaires mesurés et pour identifier les états de fonctionnement de la partie secondaire (2), l'unité d'analyse (7) étant prévue pour délivrer une première information sur la distance d'une bobine primaire (9) à une bobine secondaire (12) en tant qu'identification d'un premier état de fonctionnement et l'unité de sortie (7) déterminant une composant active ou une composante réactive d'un courant primaire mesuré pour obtenir et délivrer la première information.

2. Partie primaire (1) pour un dispositif d'alimentation en courant sans contact selon la revendication 1, dans laquelle l'unité d'analyse (7) est prévue pour délivrer une deuxième information sur une charge électrique d'au moins un récepteur de puissance (4) de la partie secondaire (2) ou de la partie secondaire (2) elle-même en tant qu'identification d'un deuxième état de fonctionnement.

3. Partie primaire (1) pour un dispositif d'alimentation en courant sans contact selon une des revendications précédentes, dans laquelle l'unité d'analyse (7) est prévue pour délivrer la première information pour déterminer la distance de la partie primaire (1) à la partie secondaire (2).

4. Partie primaire (1) pour un dispositif d'alimentation en courant sans contact selon une des revendications précédentes, laquelle partie primaire (1) contient un convertisseur continu-alternatif (8) qui est prévu pour être connecté à la source de tension (3) et pour alimenter la bobine primaire (9) en tension alternative.

5. Partie primaire (1) pour un dispositif d'alimentation en courant sans contact selon la revendication 4, dans laquelle le convertisseur continu-alternatif (8) contient une unité de commande (14) et un circuit en pont (15) avec des commutateurs à commande active qui peuvent fonctionner dans une relation de phase fixe par rapport au signal de référence de l'unité de commande (14).

6. Partie primaire (1) pour un dispositif d'alimentation en courant sans contact selon les revendications 4, 5, dans laquelle le capteur de courant (6) est connecté en série avec le convertisseur continu-alternatif (8) et la bobine primaire (9).

7. Partie primaire (1) pour un dispositif d'alimentation en courant sans contact selon les revendications 5, 6, dans laquelle le capteur de courant (6) est connecté à l'intérieur du circuit en pont (15) de telle façon qu'au moins un commutateur à commande active soit connecté entre la bobine primaire (9) et le capteur de courant (6).

8. Partie primaire (1) pour un dispositif d'alimentation en courant sans contact selon une des revendications précédentes, dans laquelle l'unité d'analyse (7) contient une unité de filtrage (16) et une unité de comparaison (17).

9. Partie primaire (1) pour un dispositif d'alimentation en courant sans contact selon la revendication 8, dans laquelle l'unité de filtrage (16) contient au moins un redresseur sensible à la phase qui peut être connecté au capteur de courant (6).

10. Partie primaire (1) pour un dispositif d'alimentation en courant sans contact selon les revendications 8, 9, dans laquelle l'unité de filtrage (16) est un redresseur sensible à la phase (18) permettant d'extraire un signal électrique en tant que mesure du courant actif dans la partie secondaire (2).

11. Partie primaire (1) pour un dispositif d'alimentation en courant sans contact selon les revendications 8, 9, dans laquelle l'unité de filtrage (16) contient un redresseur sensible à la phase (19) permettant d'extraire un signal électrique en tant que mesure du courant réactif dans la partie primaire (1).

12. Partie primaire (1) pour un dispositif d'alimentation en courant sans contact selon les revendications 9, 10, 11, dans laquelle la sortie du redresseur sensible à la phase (18) peut être connectée à un filtre sélectif en fréquence (20) pour la mise en forme du signal.

13. Partie primaire (1) pour un dispositif d'alimentation en courant sans contact selon la revendication 12, dans laquelle le filtre sélectif en fréquence (20) peut être connecté à la connexion (22) de l'unité de comparaison (17).

14. Partie primaire (1) pour un dispositif d'alimentation en courant sans contact selon les revendications 9, 10, 11, dans laquelle la sortie du redresseur sensible à la phase (19) peut être connectée à un filtre sélectif en fréquence (21) pour la mise en forme du signal.

15. Partie primaire (1) pour un dispositif d'alimentation en courant sans contact selon la revendication 14, dans laquelle le filtre sélectif en fréquence (21) peut être connecté à la connexion (23) de l'unité de comparaison (17).

16. Partie primaire (1) pour un dispositif d'alimentation en courant sans contact selon les revendications 13, 15, dans laquelle la sortie du capteur de courant (6) peut être connectée à au moins une des connexions (22, 23) de l'unité de comparaison (17).

17. Partie primaire (1) pour un dispositif d'alimentation en courant sans contact selon les revendications 8 à 16, dans laquelle l'unité de comparaison (17) comprend au moins un comparateur à deux entrées.

18. Partie primaire (1) pour un dispositif d'alimentation en courant sans contact selon la revendication 17, dans laquelle une entrée d'un comparateur (24) peut être connectée à la connexion (22) et la deuxième entrée du comparateur (24) à une source de tension de référence (26).

19. Partie primaire (1) pour un dispositif d'alimentation en courant sans contact selon les revendications 17, 18, dans laquelle une entrée d'un comparateur (25) peut être connectée à la connexion (23) et la deuxième entrée du comparateur (25) à une source de tension de référence (27).

20. Dispositif d'alimentation en courant comprenant au moins une partie primaire (1) selon une des revendications précédentes, le dispositif d'alimentation en courant présentent au moins une partie secondaire (2),
- laquelle partie secondaire (2) est prévue pour recevoir sans contact de la puissance électrique par induction,
- laquelle partie secondaire (2) est prévue pour délivrer la puissance induite à au moins un récepteur de puissance (4).

21. Dispositif d'alimentation en courant selon la revendication 20, dans lequel la partie secondaire (2) peut être alimentée en courant alternatif par la bobine secondaire (12) et est prévue pour alimenter au moins un récepteur de puissance (4).

22. Dispositif d'alimentation en courant selon une des revendications 20 ou 21, dans lequel la partie secondaire (2) contient un redresseur (11) qui peut être alimenté en courant alternatif par la bobine secondaire (12) et qui est prévu pour alimenter au moins un récepteur de puissance (4) en courant continu.
